# EUROPEAN PATENT APPLICATION

(11) **EP 3 557 558 A1**
(43) Date of publication of application: **23.10.2019**
(21) Application number: 18168277.4
(22) Date of filing: 19.04.2018
(51) Int. Cl.: G09B 19/00

(54) **VIBRATIONAL FEEDBACK SYSTEM AND METHOD**

(71) Applicant: Københavns Universitet, 1165 Copenhagen K (DK)
(72) Inventor: STROHMEIER, Paul, 2300 Copenhagen S (DK)
(74) Representative: AWA Denmark A/S

(57) **Abstract**

Disclosed is a method for providing vibrational feedback to a person in response to a movement of a part of the body of the person or an activation of a muscle of the body of the person. The method comprises the steps of: measuring by a sensor unit at least one attribute related to the movement of the part of the body and/or the activation of the muscle of the body, determining by a control unit a frequency content and/or an amplitude of a vibrational feedback, providing the vibrational feedback to the person using a vibrating device.

## Description

### Field

The present invention relates to a method and a system for providing vibrational feedback to a person in response to a movement of a part of the body of the person or an activation of a muscle of the body of the person as well as a use of said system for rehabilitation therapy.

### Background

A person typically moves his/her body or activates a muscle in order to perform a physical activity. Examples of activities are walking, cycling, doing sports, playing a musical instrument, writing, performing surgery, and using computers. When performing such movements and/or muscle activations, the brain gets feedback from the muscles and skin.

To perform these activities well, the movements and/or muscle activations will typically need to be trained and repeated. The feedback to the brain may cause the person to adapt e.g. the movements whilst the activity is performed in order to perform the activity well. Even though the feedback allows the person to perceive information about e.g. the movements, the feedback is not always sufficient to cause a sufficient adaptation to perform an activity well. It may therefore require many repetitions and training for the person to perform the activity well.

US 2009/0023122 discloses a process for motor learning, for teaching motion, or for rehabilitation of a student, the student having a motor sensory system. Plural transducers may be coupled around at least one joint of a student, the transducers for providing kinesthetic sensations to the student through its motor sensory system. Tactile control signals may be provided to control operation of the transducers to guide motions of the student.

Thereby, the student is provided with additional, vibrational feedback to guide the movement of the student.

This, however, requires a reference movement e.g. from an instructor, such that vibrational feedback can be provided to the student based on the deviation from the reference movement.

However, as this requires a reference movement e.g. from an instructor, the student can only adapt to a limited number of movements and depends on the quality of the reference movement. It may furthermore be difficult to train movements like walking or writing by hand which have a personal character, as every person will move in different tempi and ways.

Therefore, it remains a problem to provide a vibrational feedback method and system, which allow a person to adapt a larger variety of movements based on vibrational feedback.

### Summary

According to a first aspect, the invention relates to a method for providing vibrational feedback to a person in response to a movement of a part of the body of the person or an activation of a muscle of the body of the person, comprising the steps of:
- measuring by a sensor unit at least one attribute related to the movement of the part of the body and/or the activation of the muscle of the body,
- determining by a control unit a frequency content and/or an amplitude of a vibrational feedback,
- providing the vibrational feedback to the person using a vibrating device,
wherein the frequency content and/or amplitude of the vibrational feedback is determined based on a predetermined, time-invariant mapping function mapping said at least one measured attribute related to the movement of the part of the body and/or the activation of the muscle of the body to the frequency content and/or amplitude of the vibrational feedback.

Thus, by providing a time-invariant mapping function, which maps the at least one measured attribute related to the movement of the part of the body and/or the activation of the muscle of the body to the frequency content and/or amplitude of the vibrational feedback, a person may obtain feedback for movements and/or activations of a muscle regardless of the time and sequence of these. This allows the person to gain vibrational feedback on each movement and/or activation of a muscle individually, also for actions, which are individual for each person, such as writing by hand or performing surgery, and adapt each of these independently. This allows the person to adapt and increase the accuracy and precision of each of the movements and/or activations of a muscle. The activation of the muscle may be isotonic or isometric or may be a contraction or tensioning of the muscle.

By the time-invariant mapping function, a movement of a part of the body and/or activation of a muscle may independently of the environmental factors, such as time of day, yield a predetermined frequency content and/or amplitude of the vibrational feedback. Thereby an identical movement and/or activation of the muscle may yield an identical vibrational feedback frequency content and/or amplitude. This allows the person to repeat parts of a sequence of motions and/or muscle activations regardless of the environment of the person to increase the precision and/or accuracy of the sequence.

External events may modulate the frequency content and/or amplitude. In doing so additional information of events external to the movement can be perceived when executing the movement.

The measured attribute may be an acceleration, velocity, displacement, angular acceleration, angular velocity, or an angular position of a part of a body, an angle of a joint, an electric potential from a muscle or a nerve, or an extension of a piece of skin of a part of the body.

By a frequency content and/or an amplitude of the vibrational feedback being determined by the control unit, e.g. vibration pulses for augmented proprioception may be provided as a vibrational feedback. The control unit may be a microcontroller unit (MCU), a digital signal processor (DSP), or a field-programmable array (FPGA), or any combination of these. The vibrational feedback may furthermore counteract or superpose the feedback provided to the brain by e.g. the muscles and/or the skin. Thereby, certain motions and/or muscle activations may thereby feel easier or harder.

The method may furthermore be used for e.g. augmented reality or a virtual reality, where the action, which the person performs through movement of a part of the body and/or an activation of a muscle, may be a virtual action.

In some embodiments, the method further comprising the step of:
- selecting by a user a mapping function from a plurality of predetermined, time-invariant mapping functions.

By the selection of a mapping function from a plurality of predetermined, time-invariant mapping functions, the feedback may be varied dependent on the desired actions and/or external events or information.

In some embodiments, each of the mapping functions are designed for providing a vibrational feedback in response to a movement of a particular part of the body or an activation of a particular muscle of the body.

By each of the mapping functions being designed for providing a vibrational feedback in response to a movement of a particular part of the body or an activation of a particular muscle of the body, a mapping function may be selected such that the person may obtain another feedback for e.g. delicate motor functions than for e.g. larger movements and/or activations of a muscle.

In some embodiments, the at least one attribute of the movement of the part of the body is the absolute displacement or rotation of said part of the body, an activation of a muscle of a body, or a time-derivative of any of these.

In some embodiments, an accelerometer, an optical lens, an infrared (IR) lens, an ultrasonic sensor, a vibration sensor, a gyroscope, a force sensor, a tension sensor, a strain gauge, an electroactive polymer, a piezoelectric sensor, a piezoresistive material, or an electromyograph, or any combination thereof acts as the sensor unit.

In some embodiments, the vibrating device is attached to the body in proximity with said part of body and/or said muscle of the body.

By attaching the vibrating device to the body in proximity with the body and/or the muscle of the body, the person is relieved from having to e.g. hold on to a device, and may therefore move freely. This, in turn, allow for additional movements and/or activations of a muscle to be performed by said person.

According to a second aspect, the invention relates to a system for providing vibrational feedback to a person in response to a movement of a part of the body of the person or an activation of a muscle of the body of the person, comprising:
- a sensor unit adapted to measure at least one attribute related to the movement of the part of the body and/or the activation of the muscle of the body,
- a vibrating device for providing a vibrational feedback to the person, and
- a control unit, which is operationally connectable to said sensor unit and said vibrating device,
wherein the control unit is adapted to receive a sensor signal, specifying the at least one attribute related to the movement of the part of the body and/or the activation of the muscle of the body, from the sensor unit and generate a control signal based on the sensor signal using a predetermined time-invariant mapping function and transmit said control signal to said vibrating device.

By providing a time-invariant mapping function, a frequency content and/or an amplitude of the vibrational feedback may be generated from the at least one measured attribute related to the movement of the part of the body and/or the activation of the muscle of the body regardless of environmental factors, such as the time of day. Furthermore, the vibrational feedback may be identical for identical movements of a part of the body and/or identical activations of a muscle of the body. Thereby, the person may by repetition of a movement of a part of the body and/or an activation of a muscle of a body adapt the movement and/or activation of the muscle of the body.

The measured attribute may be an acceleration, velocity, displacement, angular acceleration, angular velocity, or an angular position of a part of a body, an angle of a joint, an electric potential from a muscle or a nerve, or an extension of a piece of skin of a part of the body.

In some embodiments, the control unit furthermore is connectable to a user interface and adapted to receive an input signal from said user interface and select a mapping function from a plurality of predetermined time-invariant mapping functions based on said input signal.

Consequently, a person may be able to select a mapping function from the plurality of mapping functions. Thereby, the vibrational feedback may vary dependent on the desired actions, movement of the part of the body and/or activation of the muscle. Additionally, the person may obtain another feedback for e.g. delicate motor functions than for e.g. larger movements and/or activations of a muscle.

In some embodiments, the at least one attribute of the movement of the part of the body is the absolute displacement or rotation of said part of the body, an activation of a muscle of the body, or a time-derivative of any of these.

In some embodiments, the sensor unit is an accelerometer, an optical lens, an infrared (IR) lens, an ultrasonic sensor, a vibration sensor, a gyroscope, a force sensor, a tension sensor, a strain gauge, an electroactive polymer, a piezoelectric sensor, a piezoresistive material, or an electromyograph, or any combination thereof.

In some embodiments, the vibrating device is attached to the body in proximity with said part of body and/or said muscle of the body.

Consequently, the person may operate the system with his/her hands free, thereby allowing the person to move more freely.

According to a third aspect, the invention relates to use of the system as disclosed in relation to the second aspect of the invention for rehabilitation therapy, wherein a person is provided with a vibrational feedback in response to a movement of a part of the body of the person and/or an activation of a muscle of the body of the person.

By using the system for rehabilitation therapy, the person is provided with a vibrational feedback in response to a movement of a part of the body of and/or an activation of a muscle of the body of the person. Hence, the person may become aware of the movement of the part of the body of the person and/or the activation of a muscle of the body of the person, which may in turn accelerate the rehabilitation therapy.

The different aspects of the present invention can be implemented in different ways including as an information and / or control system, and a method of providing information and / or providing control signals described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependant claims. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and non-limiting detailed description of embodiments of the present invention, with reference to the appended drawings, wherein:
Fig. 1 shows a flow chart of a method for providing vibrational feedback to a person in response to a movement of a part of the body of the person or an activation of a muscle of the body of the person according to an embodiment of the present invention,
Fig. 2 shows a schematic drawing of a system for providing vibrational feedback to a person in response to a movement of a part of the body of the person or an activation of a muscle of the body of the person according to an embodiment of the present invention, and
Fig. 3 shows a time-invariant mapping function mapping the angular displacement of a part of a body of a person to a carrier frequency of the vibrational feedback.
Fig. 4 shows a time-invariant mapping function mapping the absolute change in a joint angle relative to a previous measurement of the joint angle to the centre frequency of a stimulation.

### Detailed description

In the following description, reference is made to the accompanying figures, which show by way of illustration how the invention may be practiced.

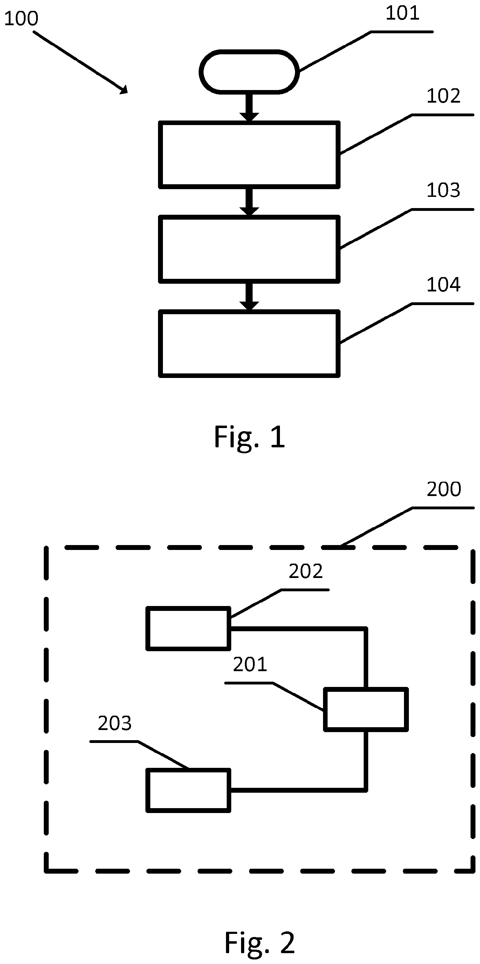

Fig. 1 shows a flow chart of a method 100 for providing vibrational feedback to a person in response to a movement of a part of the body of the person or an activation of a muscle of the body of the person according to an embodiment of the present invention. The method starts in step 101, wherein a person moves a part of the body and/or activates a muscle. In step 102, an attribute related to the movement of the part of the body of the person and/or the activation of the muscle is measured by a sensor unit. Then, in step 103, a frequency content and/or an amplitude of the vibrational feedback is determined by a control unit based on a predetermined time-invariant mapping function, mapping the measured attribute related to the part of the body and/or the activation of the muscle to the frequency content and/or amplitude of the vibrational feedback. In step 104, the vibrational feedback is provided to the person by a vibrating unit. In another embodiment, the method may include the step of selecting a mapping function from a plurality of predetermined time-invariant mapping functions.

Fig. 2 shows a schematic drawing of a system 200 for providing vibrational feedback to a person in response to a movement of a part of the body of the person or an activation of a muscle of the body of the person according to an embodiment of the present invention. The system 200 comprises a sensor unit 202, which measures an attribute related to a movement of a part of the body of a person. The system 200 also comprises a vibrating unit 203, which provides a vibrational feedback to the person. Furthermore, the system 200 comprises a control unit 201, which is connected to the sensor unit 202 and the vibrating unit 203. The connection may be a wired connection or a wireless connection, such as Bluetooth®, ZigBee, or Z-Wave, or any combination thereof. Upon receiving a sensor signal, which specifies the attribute related to the movement of a part of the body of person, from the sensor unit 202, the control unit 201 generates a control signal. The control unit 201 generates the control signal based on the sensor signal and a predetermined mapping of the attribute of the movement of the part of the body to a frequency content and/or amplitude of the vibrational feedback. The control unit 201 then transmits the control signal to the vibrating unit 203. In another embodiment the sensor unit measures an attribute related to an activation of a muscle of the body of the person.

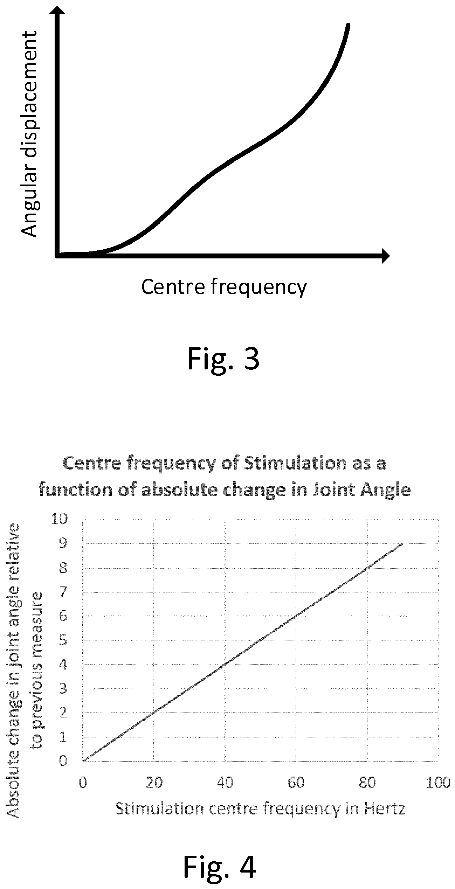

Fig. 3 shows a time-invariant mapping function mapping the angular displacement of a part of a body of a person to a centre frequency of the vibrational feedback. In another embodiment, the time-invariant mapping function may map a time derivative of the angular displacement, the absolute displacement or a time derivative of this, an angle of a joint, an electric potential from a muscle or a nerve or the stretching of the skin of a part of the body to the frequency content and/or amplitude, such as the carrier frequency of the vibrational feedback. In yet another embodiment, the angular displacement or another attribute related to the movement of the body of the person and/or the activation of a muscle of the body may be mapped to an amplitude of the centre frequency, a number of even and/or odd harmonics of the centre frequency or an amplitude of these of the vibrational feedback. In another embodiment, the vibrational feedback may be a frequency modulated signal. The mapping function may then map the angular displacement or another attribute related to the movement of the body of the person and/or the activation of a muscle of the body to a carrier frequency, an amplitude of a carrier frequency component, a modulation frequency, an amplitude of a modulation frequency component, a number of even and/or odd harmonics of a carrier or modulation frequency or an amplitude of these of the vibrational feedback.

Fig. 4 shows a time-invariant mapping function mapping the absolute change in a joint angle relative to a previous measurement of the joint angle to the centre frequency of a stimulation. As seen in Fig. 4, the mapping function is a linear function. In another embodiment, however, the mapping function may be non-linear.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method for providing vibrational feedback to a person in response to a movement of a part of the body of the person or an activation of a muscle of the body of the person, comprising the steps of:
- measuring by a sensor unit at least one attribute related to the movement of the part of the body and/or the activation of the muscle of the body,
- determining by a control unit a frequency content and/or an amplitude of a vibrational feedback,
- providing the vibrational feedback to the person using a vibrating device,
wherein the frequency content and/or amplitude of the vibrational feedback is determined based on a predetermined, time-invariant mapping function mapping said at least one measured attribute related to the movement of the part of the body and/or the activation of the muscle of the body to the frequency content and/or amplitude of the vibrational feedback.

2. A method according to claim 1, further comprising the step of:
- selecting by a user a mapping function from a plurality of predetermined, time-invariant mapping functions.

3. A method according to claim 2, wherein each of the mapping functions are designed for providing a vibrational feedback in response to a movement of a particular part of the body or an activation of a particular muscle of the body.

4. A method according to any one of the preceding claims, wherein the at least one attribute of the movement of the part of the body is the absolute displacement or rotation of said part of the body, an activation of a muscle of a body, or a time-derivative of any of these.

5. A method according to any one of the preceding claims, wherein an accelerometer, an optical lens, an infrared (IR) lens, an ultrasonic sensor, a vibration sensor, a gyroscope, a force sensor, a tension sensor, a strain gauge, an electroactive polymer, a piezoelectric sensor, a piezoresistive material, or an electromyograph, or any combination thereof acts as the sensor unit.

6. A method according to any one of the preceding claims, wherein the vibrating device is attached to the body in proximity with said part of body and/or said muscle of the body.

7. A system for providing vibrational feedback to a person in response to a movement of a part of the body of the person or an activation of a muscle of the body of the person, comprising:
a sensor unit adapted to measure at least one attribute related to the movement of the part of the body and/or the activation of the muscle of the body,
a vibrating device for providing a vibrational feedback to the person, and
a control unit, which is operationally connectable to said sensor unit and said vibrating device,
wherein the control unit is adapted to receive a sensor signal, specifying the at least one attribute related to the movement of the part of the body and/or the activation of the muscle of the body, from the sensor unit and generate a control signal based on the sensor signal using a predetermined time-invariant mapping function and transmit said control signal to said vibrating device.

8. A system according to claim 7, wherein the control unit furthermore is connectable to a user interface and adapted to receive an input signal from said user interface and select a mapping function from a plurality of predetermined time-invariant mapping functions based on said input signal.

9. A system according to claim 7 or 8, wherein the at least one attribute of the movement of the part of the body is the absolute displacement or rotation of said part of the body, an activation of a muscle of the body, or a time-derivative of any of these.

10. A system according to any one of the claims 7-9, wherein the sensor unit is an accelerometer, an optical lens, an infrared (IR) lens, an ultrasonic sensor, a vibration sensor, a gyroscope, a force sensor, a tension sensor, a strain gauge, an electroactive polymer, a piezoelectric sensor, a piezoresistive material, or an electromyograph, or any combination thereof.

11. A system according to any one of the claims 7-10, wherein the vibrating device is attached to the body in proximity with said part of body and/or said muscle of the body.

12. Use of a system according to any one of the claims 7-11 for rehabilitation therapy, wherein a person is provided with a vibrational feedback in response to a movement of a part of the body of the person and/or an activation of a muscle of the body of the person.
